# FASCICULE DE BREVET EUROPEEN

(11) **EP 2 340 997 B1**
(45) Date de publication et mention de la délivrance du brevet: **09.05.2012**
(21) Numéro de dépôt: 10015170.3
(22) Date de dépôt: 01.12.2010
(51) Int. Cl.: B64C 27/00, F16F 15/14

(54) **Mécanisme amortisseur de vibrations, et appareil volant muni d'une structure porteuse et d'un rotor muni d'un tel mécanisme**
Schwingungsdämpfervorrichtung sowie Fluggerät mit einer Tragstruktur sowie einem Rotor mit einer solchen Vorrichtung
Vibration damping mechanism and aircraft with a support structure and a rotor with such a mechanism

(30) Priorité: 17.12.2009 FR 0906121
(43) Date de publication de la demande: 06.07.2011
(73) Titulaire: EUROCOPTER, 13725 Marignane Cédex (FR)
(72) Inventeur: Cranga, Paul, 13004 Marseille (FR); Manfredotti, Thomas, 06480 La Colle sur Loup (FR); Re, Joachim, 13100 Aix en Provence (FR); Pula, Matthieu, 13090 Aix en Provence (FR)
(74) Mandataire: Pouillot, Laurent Pierre Paul

(56) Documents cités:
- FR-A1- 2 808 256
- US-A- 5 934 424

## Description

La présente invention est du domaine des équipements pour appareil volant comportant une structure porteuse liée à un rotor, tels qu'une hélice d'un avion ou un rotor d'un giravion et par exemple un hélicoptère. Plus particulièrement, la présente invention relève des mécanismes amortisseurs de vibrations induites par des instabilités aéroélastiques résultant d'un couplage entre les modes de vibrations de la structure porteuse et les modes de vibration du rotor. L'invention a pour objet un tel mécanisme et un appareil volant muni d'un tel mécanisme.

Parmi les aéronefs, on distingue les appareils volants muni d'un rotor lié à une structure porteuse, par exemple un avion muni d'une hélice ou encore un giravion muni d'un rotor de sustentation voire de propulsion.

Le rotor comporte classiquement un mât rotor solidaire d'un moyeu, ce moyeu portant une pluralité de pales radialement réparties.

Par ailleurs, la structure porteuse possède une cellule, dénommée parfois « fuselage » dans laquelle sont agencés des moyens moteurs aptes à entraîner en rotation le rotor. De plus, la structure porteuse comporte une structure de montage du rotor, permettant de fixer le rotor à la cellule.

Une telle structure de montage comporte usuellement des moyens de transmission mécanique ainsi que des éléments de fixation de ces moyens de transmission à la cellule. Par exemple, une structure de montage d'un giravion, appelée « pylône » par l'homme du métier en langue française et « pylon » en langue anglaise, comprend une boîte de transmission principale de puissance et des éléments de fixations de cette boîte de transmission principale de puissance à la cellule, telles que des barres de suspension par exemple.

Les moyens de motorisation de la structure porteuse entraînent alors le rotor via les moyens de transmission de la structure de montage.

La structure porteuse et le rotor sont chacune soumises à des excitations forcées inhérentes à la vitesse d'avancement de l'aéronef.

L'excitation dynamique du rotor, par exemple le rotor de sustentation et de propulsion d'un hélicoptère, résulte des charges aérodynamiques auxquelles ce rotor est soumis, ces charges aérodynamiques se décomposant en axes fixes en un effort coplanaire s'exerçant dans le plan général du moyeu du rotor qui est perpendiculaire à l'axe de rotation du rotor, en un effort axial qui s'exerce suivant l'axe de rotation du rotor, et en un moment coplanaire s'exerçant dans un plan perpendiculaire à l'axe de rotation du rotor tangentiellement au mouvement de rotation du moyeu du rotor. Les fréquences de telles vibrations en axes fixes c'est-à-dire liés à la cellule de la structure porteuse, sont égales au produit kbΩ où « Ω » désigne la vitesse de rotation du rotor, « b » le nombre de pales et « k » un nombre entier positif. Les fréquences fondamentales correspondent à un nombre « k » égal à l'unité. Ces excitations sont transmises du rotor à la structure par le pylône.

De même, la structure porteuse est soumise à des excitations forcées. Par exemple, la poutre de queue d'une cellule d'hélicoptère peut être excitée directement par un flux d'air turbulent provenant du rotor principal de sustentation et de propulsion.

Les appareils volants munis d'un rotor sont globalement structurés pour pallier aux conséquences de telles vibrations.

A cet effet, il est courant d'équiper le rotor ou la structure de systèmes antivibratoires, dénommés parfois résonateur, pour filtrer les efforts dynamiques aux fréquences les plus gênantes, d'un point de vue confort des passagers ou encore pour éviter la casse d'un élément soumis à cette fatigue vibratoire. Ces systèmes antivibratoires sont alors réglés sur un des harmoniques de la vitesse de rotation du rotor.

Dans ces conditions, il a été proposé tel que selon le document FR2808256 (EUROCOPTER FRANCE) par exemple, des résonateurs pendulaires selon lesquels des masses sont montées en pendule sur le moyeu de la tête du rotor. De tels résonateurs pendulaires permettent de s'opposer aux vibrations forcées induites par la tête de rotor en mouvement, en agissant suivant l'axe et dans le plan du rotor. La raideur nécessaire de ces résonateurs pendulaires pour filtrer les vibrations est apportée par le champ de force centrifuge dû à la rotation du rotor. Cette rotation anime autour d'articulations les masses pendulaires d'un mouvement harmonique dont la fréquence est multiple de la vitesse de rotation Q du rotor. La structure de ces résonateurs pendulaires permet leur intégration aisée sur la tête de rotor.

Cependant, de tels résonateurs pendulaires sont efficaces pour uniquement une fréquence donnée. De tels résonateurs pendulaires sont agencés pour équiper une tête de rotor implantée en sommet de la structure porteuse, le rotor procurant la sustentation voire la propulsion, et ne prennent pas en compte les caractéristiques propres de la structure porteuse relatives notamment à sa masse et à sa fréquence d'excitation.

En effet, les résonateurs ont pour effet d'étouffer les vibrations en créant une antirésonance à la fréquence donnée de réglage. En conséquence, le résonateur génère deux nouvelles résonances (ou modes de vibration) dont les deux fréquences respectives sont situées de part et d'autre de la fréquence d'antirésonance. La plage de fréquence définie par ces deux modes reste relativement étroite. Néanmoins, les deux modes de vibrations créés par les résonateurs ne sont normalement pas gênants dans la mesure où les deux résonances diffèrent de la fréquence donnée à traiter.

Le document US 5 934 424 propose de mouvoir une masse à l'aide d'un moteur, ce moteur déplaçant ladite masse en fonction d'informations provenant d'un capteur de mesure. Ce document dévoile alors l'existence d'un pendule contrôlé, au lieu d'un système auto-adaptatif simple.

On connait aussi des mécanismes amortisseurs de vibrations pour traiter les vibrations qui résultent de l'excitation forcé de la structure porteuse. On peut par exemple se reporter au document FR2784350 (EUROCOPTER FRANCE) qui décrit un résonateur amorti agencé pour être implanté en queue de la structure porteuse pour filtrer des fréquences données.

Outre les excitations forcées, un autre phénomène vibratoire peut être à l'origine de problèmes majeurs.

Dans le domaine aéronautique en particulier, un problème réside dans l'atténuation des phénomènes vibratoires induits par les instabilités aéroélastiques que subit un appareil en vol. Par exemple, de telles instabilités aéroélastiques peuvent résulter du couplage entre les modes de vibration de la structure porteuse et le flux d'air en mouvement autour d'elle, à savoir notamment une structure de type voilure fixe (aile d'avion) ou voilure tournante (pales de rotor de giravion ou d'hélice d'avion). Il s'agit alors d'instabilités connues par l'homme du métier sous le terme général « flottement » ou « flutter » en langue anglaise.

D'autres instabilités aéroélastiques correspondent par exemple aux instabilités dénommées « whirl flutter » en langue anglaise désignant le couplage des modes de vibrations d'un rotor équipé de pales ou d'aubes avec des modes de vibrations de la structure porteuse supportant le rotor.

Ces phénomènes de « flutter » et de « whirl flutter » se caractérisent par des vibrations à cycle limite ou des vibrations divergentes pouvant conduire à des ruptures de pièces mécaniques ou d'éléments structuraux. Il est donc impératif de prendre en compte ces phénomènes dans la conception de l'aéronef de façon à repousser les vitesses critiques (vitesse d'avancement, vitesse de rotation du rotor) au-delà des limites du domaine de vol.

En particulier pour le « whirl-flutter », les constructeurs évitent que les modes du rotor soient susceptibles de se coupler aux modes de la structure porteuse, assurant ainsi la compatibilité de ces deux ensembles. Pour cela il suffit généralement de s'assurer du placement des fréquences propres et des amortissements respectifs des modes des différents ensembles.

Il est cependant difficile de modifier à posteriori les caractéristiques modales de la structure porteuse ou du rotor, si de tels phénomènes apparaissent au cours de la mise au point de l'aéronef. De plus, un constructeur peut être amené à modifier un aéronef existant pour répondre à des besoins spécifiques d'un utilisateur, ce qui peut impacter le comportement de l'appareil vis-à-vis de ces instabilités.

Pour résoudre ces phénomènes qui peuvent apparaître comme explicité précédemment, le constructeur ne peut pas utiliser les résonateurs décris précédemment qui permettent de traiter des excitations forcées, et non pas des couplages. Dès lors, le constructeur choisit souvent de modifier sa structure porteuse, en la raidissant par exemple, une telle modification ayant un coût financier mais aussi un impact en terme de masse non négligeable. De plus, il peut être délicat de réaliser les modifications en question sur un appareil existant.

La présente invention a alors pour objet de lutter contre le phénomène de couplage des modes de vibrations de la structure porteuse et du rotor d'un aéronef, par des moyens simples, peu onéreux, et pouvant être facilement implémentés sur un appareil existant. Le principe est d'apporter de l'amortissement au(x) mode(s) de vibration étant en cause dans le couplage instable.

Selon l'invention telle que revendiquée, un mécanisme amortisseur de vibrations pour empêcher le couplage des modes de vibration d'une structure porteuse et des modes de vibration d'un rotor fixé à la structure comprend un support apte à être fixé à un rotor et au moins un résonateur comportant une masse portée par le support par l'intermédiaire de moyens de montage en mobilité de cette masse sur le support, ce mécanisme comportant des moyens d'amortissement du résonateur qui sont interposés entre le résonateur et un organe de prise sur le support.

Ainsi, le mécanisme est passif en comprenant un moyen de montage en mobilité passif et des moyens d'amortissement passifs. Ce mécanisme est réglé en fonction de la fréquence propre du mode propre de vibration de la structure porteuse à traiter.

Le mécanisme est donc auto-adaptatif et ne nécessite pas l'implantation de capteurs et d'un moyen de commande du déplacement de la masse.

On rappelle qu'un moyen d'amortissement apporte un effort en quadrature de phase avec le déplacement du corps considéré, ce qui a un effet de limitation en amplitude des oscillations. Un moyen générant des frictions a un tout autre effet, la friction empêchant un déplacement d'un corps par rapport à un autre corps jusqu'à un certain seuil d'effort. La friction n'est donc pas assimilable à de l'amortissement.

La démarche de la présente invention a consisté dans sa globalité à rassembler sur un rotor non seulement un résonateur avec l'ensemble de ses composants propres, mais aussi des moyens d'amortissement liés au résonateur. Les moyens d'amortissement sont tarés en fonction des caractéristiques propres à la structure porteuse de l'appareil, et notamment en fonction de sa masse et de sa fréquence d'excitation. Le rotor est exploitée comme interface entre le résonateur et la structure porteuse pour l'interposition des moyens d'amortissement, et des organes propres au résonateur sont exploités au moins en partie pour l'implantation des moyens d'amortissement sur le rotor, avec pour avantage de réduire au mieux l'encombrement et la masse du mécanisme. L'ensemble du mécanisme est placé au plus proche de la source des vibrations harmoniques et/ ou d'instabilités aéroélastiques, avec pour avantage d'accroître ses performances. Le résonateur et les moyens d'amortissement constituent des organes structurellement distincts, les moyens d'amortissement pouvant être facilement implantés sur l'appareil indépendamment de l'implantation des résonateurs faite au préalable. L'implantation des moyens d'amortissement n'induit pas de modification de la structure porteuse en elle-même, et leur installation est potentiellement optionnelle selon les besoins.

Le mécanisme a pour effet d'amortir les vibrations sur une plage de fréquence large, sans création d'antirésonance de vibrations contrairement à un résonateur pendulaire classique.

L'amortissement apporté permet de modifier les modes de vibration de la structure porteuse supportant le rotor équipé du mécanisme, et empêche donc la création d'un couplage destructeur entre les modes de vibrations du rotor et de la structure porteuse de ce rotor.

De plus, on note que le mécanisme est cumulable avec un résonateur pendulaire traitant un des harmoniques du rotor.

Les moyens de montage en mobilité comportant un bras articulé par masse, le résonateur est préférentiellement du type pendulaire et comprend une masse portée en pendule par le support du mécanisme par l'intermédiaire d'un bras articulé. Plus spécifiquement la masse est portée sur une branche ou organe analogue de ce support à laquelle il est affecté. Une telle branche est notamment un organe radialement étendu au-delà de l'axe de rotation du moyeu, dans un plan général qui est orthogonal à cet axe de rotation.

L'agencement d'un tel bras articulé permet son exploitation aisée pour la prise des moyens d'amortissement sur les moyens de mobilité de la masse. Le bras articulé est non seulement un organe qui confère la mobilité pendulaire de la masse du résonateur, mais aussi est un organe par l'intermédiaire duquel les moyens d'amortissement du résonateur sont montés sur le support. L'organisation du mécanisme rend possible une exploitation aisée de moyens d'amortissement de types relativement quelconques, selon les besoins, le type d'appareil ou les caractéristiques propres à la structure porteuse devant être préservée des vibrations.

Le résonateur constitue plus particulièrement des moyens aptes à s'opposer aux vibrations sur une première plage de fréquences étroites induites par une excitation forcée à laquelle est soumis le rotor. Les moyens d'amortissement associés au résonateur sont aptes à s'opposer aux vibrations à l'origine d'instabilités sur une deuxième plage de fréquences plus large que ladite première plage de fréquences en étant adaptés en fonction des caractéristiques d'une structure porteuse de l'appareil volant et/ou en fonction d'imperfections constatées de l'amortissement des vibrations, et sont surtout aptes à s'opposer aux instabilités aéromécaniques (flottement...).

Selon divers modes de réalisation, l'organe de prise est indifféremment un organe fixe ou un organe mobile du support. Plus particulièrement, l'organe de prise que comporte le moyeu est susceptible d'être un organe fixe, tel qu'une dite branche ou organe analogue que comporte le support, ou d'être un organe mobile, tel qu'un résonateur, les moyens d'amortissement étant interposés en prise sur deux résonateurs voisins et plus particulièrement sur les bras articulés qu'ils comportent respectivement.

En outre, la masse est portée en pendule sur le moyeu selon une mobilité de pivotement autour d'au moins un axe de pivotement. Un tel axe de pivotement est susceptible d'être orienté indifféremment parallèlement et/ou perpendiculairement à l'axe de rotation du moyeu. Par exemple encore, le bras des moyens de montage en mobilité de la masse est articulé sur le support selon une mobilité en pivotement autour d'un axe orienté parallèlement à l'axe de rotation de la tête de rotor pour amortir les vibrations forcées spécifiquement dans le plan général de la tête de rotor en générant un effort dans ce plan. Par exemple encore, ce bras est articulé sur le support selon une mobilité en pivotement autour d'un axe orienté orthogonalement à l'axe de rotation de la tête de rotor, pour atténuer voire amortir les vibrations forcées spécifiquement hors du plan général de la tête de rotor en générant un couple hors de ce plan.

Le bras articulé est avantageusement agencé en bras de levier, en comportant entre ses extrémités au moins une zone d'inflexion. Une telle zone d'inflexion est par exemple formée à partir d'un agencement du bras de levier en coude ou en T. Le bras articulé est articulé sur le moyeu entre ses extrémités et sur les moyens d'amortissement à l'une de ses extrémités, notamment à son extrémité la plus proche de l'axe de rotation du support. Le bras articulé est porteur de la masse à son autre extrémité de sorte que cette dernière soit disposée au plus éloigné de l'axe de rotation de la tête de rotor.

Les moyens d'amortissement sont susceptibles d'être du type à déformation mécanique, tel qu'un vérin hydraulique, ou élastique à l'aide d'un organe formé à partir d'un élastomère à angle de perte important par exemple.

Ainsi, les moyens d'amortissement peuvent être de type soit hydraulique, soit pneumatique, soit élastique ou soit magnétique, et n'incluent de fait pas des moyens mécaniques à frictions pour que des petits déplacements de la masse mobile soient permis.

Les moyens d'amortissement ont favorablement un coefficient d'amortissement constant dans le temps, et constant en fonction de la température et de l'amplitude d'oscillation, pour produire un effort proportionnel à la vitesse de rotation de la masse.

Un mécanisme à friction ne permettrait pas un fonctionnement correct car le déplacement de la masse ne serait autorisé qu'à partir d'un certain niveau d'effort. Pour de faibles excitations le système antivibratoire serait bloqué : le risque serait que la structure à isoler se caractérise par une réponse à cycle limite, le système antivibratoire ne remplissant sa fonction que pour les plus fortes amplitudes de vibration.

Selon une variante, le résonateur est monté mobile sur une première branche du support. Les moyens d'amortissement sont interposés entre les moyens de montage en mobilité que comporte le résonateur, et une deuxième branche du moyeu voisine de la première branche qui constitue le dit organe de prise.

Selon une autre variante, une pluralité de résonateurs sont montés mobiles sur le support. Les moyens d'amortissement sont interposés entre les moyens de montage en mobilité de deux résonateurs voisins sur lesquels les moyens d'amortissement sont conjointement en prise.

Les moyens d'amortissement sont encore susceptibles d'être du type électromagnétique associant des organes magnétiques coopérant respectivement affectés au résonateur et au support. Plus particulièrement, l'un des organes magnétiques est globalement agencé en cage intégrant au moins un élément magnétique, cette cage logeant un corps formant au moins en partie l'autre organe magnétique.

Selon une forme de réalisation, le résonateur est monté mobile en pivotement sur le support par l'intermédiaire d'un bras articulé autour d'un axe parallèle à l'axe de rotation du support.

Selon une variante, la cage est portée par la branche du moyeu sur laquelle est monté le résonateur pendulaire, en étant disposée en décalage axial par rapport au plan global de mobilité du résonateur pendulaire. Le corps est relié au résonateur pendulaire par l'intermédiaire d'une bielle de manoeuvre.

Selon une autre variante, la cage est portée par une branche du support sur laquelle est monté le résonateur pendulaire. Au moins un élément magnétique intégré à la cage est disposé en décalage axial par rapport au plan global de mobilité du résonateur et le corps constitue au moins en partie la masse du résonateur pendulaire.

Selon encore une autre variante, la cage est portée par le bras d'articulation que comporte le résonateur pendulaire. Le corps constitue au moins en partie la masse du résonateur pendulaire et est tangentiellement articulé à l'extrémité d'une bielle de retenue qui est articulée à son autre extrémité sur l'organe de prise que comporte le support.

L'utilisation de moyens électromagnétiques, dont l'encombrement et la masse sont avantageusement réduits à partir de l'exploitation de la masse du résonateur pendulaire pour former l'un des organes magnétiques, permet d'éviter les frottements entre les pièces en mouvement.

Une application du mécanisme de la présente invention réside notamment dans son intégration à un rotor destiné à être implanté au sommet d'une structure porteuse notamment dans le cas d'une application à un giravion et en particulier un hélicoptère. Cependant, il doit être compris que le mécanisme de la présente invention est applicable à toute tête de rotor pour appareil volant.

Dans ce contexte, la présente invention a aussi pour objet un appareil volant muni d'un rotor et d'une structure porteuse comportant une cellule et une structure de montage du rotor à la cellule. Cet appareil volant est remarquable en ce que le rotor comporte un mécanisme amortisseur de vibrations selon l'invention tel que décrit précédemment pour empêcher le couplage des modes de vibration de la structure porteuse et des modes de vibration du rotor.

Des exemples de réalisation de la présente invention vont être décrits en relation avec les figures des planches annexées, dans lesquelles :
- la fig.1 illustre un aéronef selon l'invention.
- la fig.2 illustre une tête de rotor munie de résonateurs pendulaires qui sont articulés sur cette tête de rotor, et est composée de schémas a, b et c représentant respectivement diverses positions de masses pendulaires en mouvement que comprennent ces résonateurs.
- les fig.3 et fig.4 sont des illustrations d'une tête de rotor équipée d'un mécanisme de la présente invention selon des formes respectives de réalisation, vue dans un plan orthogonal à l'axe de rotation de cette tête de rotor.
- la fig.5 est une illustration partielle en coupe axiale d'une tête de rotor équipée d'un mécanisme de la présente invention selon une autre forme de réalisation.
- la fig.6 est une représentation schématique d'une tête de rotor équipée d'un mécanisme de la présente invention selon une autre forme de réalisation, vue dans un plan orthogonal à l'axe de rotation de cette tête de rotor.
- les fig.7 et fig.8 sont des représentations schématiques d'une tête de rotor équipée d'un mécanisme de la présente invention selon une autre forme de réalisation, respectivement vue dans un plan orthogonal et vue dans un plan parallèle à l'axe de rotation de cette tête de rotor.

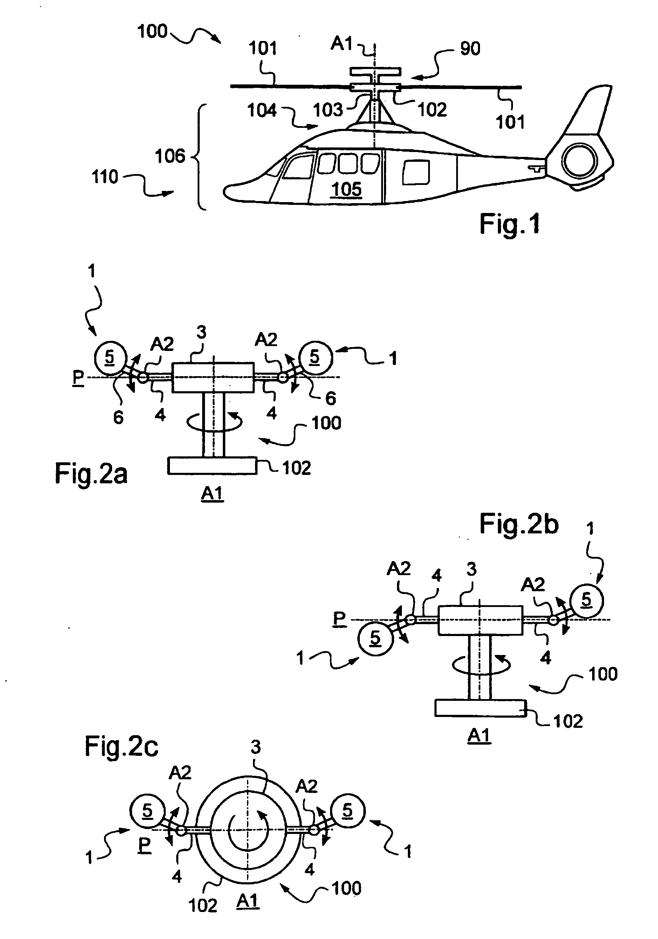

En référence à la figure 1, selon l'invention un appareil volant 110 comporte un rotor 100 porté par une structure porteuse 106.

La structure porteuse 106 possède une cellule 105 apte à accueillir des passagers et des moyens moteurs de type turbomoteur par exemple, ainsi qu'une structure de montage 104 incluant des moyens de transmission et portant le rotor 100. Les moyens de transmission sont en outre liés aux moyens de motorisation.

Par exemple, sur un hélicoptère, la structure de montage 104 comprend une boîte de transmission principale de puissance fixée sur la cellule 105 par des éléments de fixation, de type barre de suspension par exemple.

Le rotor 100 est alors pourvu d'un mât rotor 103 en prise d'une part sur la structure de montage 104 et d'autre part sur un moyeu 102 du rotor 100. Au moins deux pales 101 sont réparties radialement sur ce moyeu 102.

Selon l'invention, un mécanisme 90 est agencé sur le rotor 100 pour éviter la création d'un couplage entre les modes de vibrations de la structure porteuse et les modes de vibrations du rotor. Ce mécanisme 90 comporte un support fixé au moyeu 102. Dès lors, le mécanisme 90 effectue une rotation autour d'un axe de rotation A1 du rotor.

Sur la fig.2, les schémas (a), (b) et (c) illustrent les modalités de fonctionnement d'un résonateur pendulaire 1 du type connu et utilisé dans le domaine des appareils volants munis d'un rotor 100 pourvu d'un moyeu 102, giravions notamment. Globalement, de tels appareils volants associent une structure porteuse 106 qui est équipée de moyens motorisés pour assurer sa sustentation voire son déplacement, sur lesquels moyens motorisés le rotor 100 est destiné à être en prise. La structure porteuse est soumise à des contraintes vibratoires dues aux vibrations harmoniques du rotor 100 en rotation et/ ou à des instabilités aéroélastiques.

Ces contraintes vibratoires dues aux vibrations harmoniques génèrent des vibrations qui induisent des efforts sur le rotor 100. Ces efforts sont orientés :
*) axialement suivant l'axe de rotation A1 de la tête de rotor,
*) dans le plan général P de la tête de rotor, et
*) tangentiellement au trajet rotatif de la tête de rotor, en générant un couple.

Les contraintes vibratoires dues à des phénomènes vibratoires divergents conduisent quant à elles à des instabilités aéroélastiques des structures. Pour contrer ces contraintes, la tête de rotor comprend un support 3 muni de branches 4 qui sont chacune porteuses d'un résonateur pendulaire 1. Chaque résonateur pendulaire 1 comprend une masse 5 portée en pendule au moyen d'un bras articulé 6 par une branche 4 qui lui est affectée. Sur l'exemple illustré, la masse 5 est articulée en pendule sur la branche 4 en mobilité.

Les résonateurs pendulaires 1 sont structurés et portés par le moyeu 3 pour amortir les vibrations auxquelles est soumis spécifiquement le rotor 100. Sur les schémas (a) et (b), les masses pendulaires 5 sont articulées sur le support 3 autour d'un axe de pivotement A2 orthogonal à l'axe de rotation A1, de sorte qu'elles soient mobiles par rapport au plan général P du support 3 en agissant hors de ce plan P. Sur le schéma (a), les masses pendulaires 5 génèrent un effort axial hors de ce plan P, et sur le schéma (b) les masses pendulaires 5 génèrent un moment hors du dit plan P. Sur le schéma (c), les masses pendulaires 5 sont articulées sur le support 3 autour d'axes respectifs de pivotement A2 qui sont parallèles à l'axe de rotation A1 du rotor 100, les masses pendulaires 5 générant un effort dans le plan général P du support 3.

De tels résonateurs pendulaires 1 sont adaptés pour traiter des fréquences de vibrations au regard des harmoniques du rotor, mais ne prennent pas en compte les caractéristiques de la structure porteuse, à savoir le fuselage dans une application hélicoptère, relatives à sa masse et à sa fréquence d'excitation notamment. De tels résonateurs pendulaires ne sont pas adaptés au traitement des fréquences asynchrones du rotor. On rappelle qu'un apport d'un très faible amortissement par un moyen complémentaire pourrait éventuellement convenir.

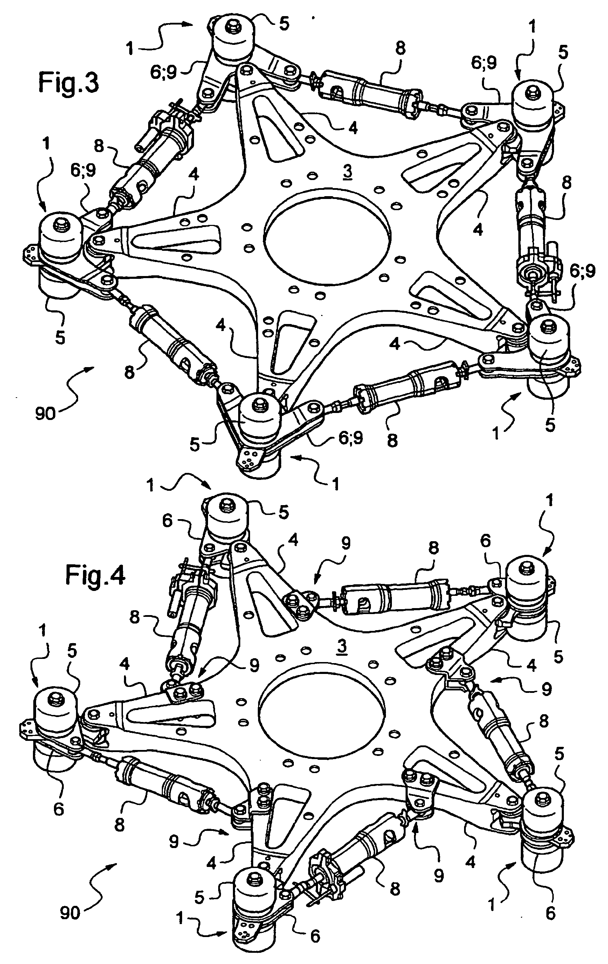

Sur les fig.3 à fig. 8, un rotor 100 est représenté avec le support 3 et au moins une branche 4 de fixation d'un mécanisme 90 qui lui est affecté. Chacune des branches 4 que comporte le moyeu 3 est équipée à son extrémité libre d'un résonateur pendulaire 1 du type de celui représenté sur la fig.2, pour notamment amortir les vibrations harmoniques auxquelles est soumis le rotor 100 en rotation. Pour parfaire la filtration des vibrations et empêcher un couplage entre les modes de vibrations du rotor et les modes de vibrations de la structure porteuse de ce rotor, le mécanisme 90 est équipé de moyens d'amortissement 8 du mouvement pendulaire de chaque masse 5. Ces moyens d'amortissement 8 prennent en compte les caractéristiques propres à la structure porteuse 106 en question, notamment sa masse et sa fréquence d'excitation. Il s'agit alors d'augmenter positivement les coefficients d'amortissement des surfaces aérodynamiques ou encore ceux du fuselage

Plus particulièrement, le rotor 100 est équipé d'un mécanisme 90 amortisseur de vibrations qui associe des résonateurs pendulaires 1, comprenant leur masse 5 portée par le bras articulé 6 de moyens de montage en mobilité de cette masse 5 sur le moyeu 3, avec des moyens d'amortissement 8 des mouvements des résonateurs pendulaires 1.

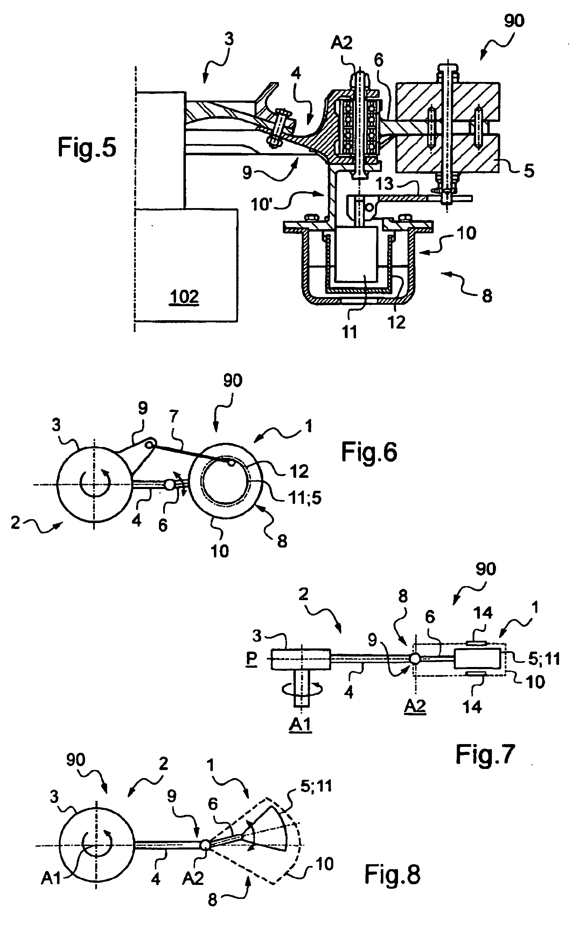

Ces moyens d'amortissement 8 sont affectés à chacun des résonateurs pendulaires 1 pour contrer leur effet en fonction des caractéristiques propres à la structure porteuse, en étant interposés entre le résonateur pendulaire 1 correspondant et un organe de prise 9 sur le support 3 de la tête de rotor 2. De tels moyens d'amortissement 8 sont susceptibles d'être du type à déformation mécanique ou élastique, tels qu'illustrés sur les fig.3 et fig.4, ou encore d'être du type électromagnétique mettant en oeuvre des organes magnétiques coopérant respectivement affectés à la masse 5 et au support 3, tels qu'illustrés sur les fig.5 à fig.8.

Le mécanisme 90 amortisseur de vibrations de la présente invention est d'un encombrement et d'une masse réduits, et exploite des organes existants du support 3 pour l'implantation des moyens d'amortissement 8, résonateurs pendulaires 1 notamment et plus particulièrement le bras articulé 6 et/ou la masse 5 qu'ils comprennent. L'installation et le réglage des moyens d'amortissement 8 sont susceptibles d'être effectués optionnellement, voir d'être effectués sur un appareil existant en fonction des besoins ou d'instabilités de la structure porteuse révélées à l'usage. Une telle installation peut être effectuée sans modification structurelle majeure du rotor 100 et/ou de la structure porteuse existantes, et les moyens d'amortissement 8 peuvent être facilement sélectionnés et mis en place selon les besoins et/ou selon la typologie de l'appareil volant sur lequel le ou les mécanismes doivent être implantés.

Sur les fig.3 et fig.4, la tête de rotor 2 est représentée suivant le plan général du support 3 qu'elle comprend. Ce support 3 est muni de cinq branches 4 radialement réparties, avec lequel support 3 elles forment un ensemble monobloc pouvant être obtenu par moulage. Des résonateurs pendulaires 1 sont installés à l'extrémité libre de chacune des branches 4 par l'intermédiaire du bras articulé 6 qu'ils comportent. Ces bras 6 sont articulés entre leurs extrémités sur la branche 4 qui leur est affectée autour d'un axe de pivotement A2 parallèle à l'axe de rotation A1 du support 3. Pour chacun des résonateurs 1, la masse 5 et les moyens d'amortissement 8 qui leurs sont affectés sont montés à une extrémité respective du bras articulé 6 correspondant. Sur les exemples de réalisation illustrés, les moyens d'amortissement 8 sont constitués de vérins hydrauliques. Les bras articulés 6 sont avantageusement agencés en bras de levier, de sorte que l'effet que procure la masse pendulaire 5 soit amplifié. Une telle amplification permet de réduire l'encombrement et la masse globales du mécanisme, en complément d'une exploitation avantageusement associée entre deux moyens d'amortissement 8 susceptibles d'être affectés à des résonateurs 1 voisins, tel qu'illustré sur la fig.3.

Plus particulièrement selon la variante représentée sur la fig.3, les bras articulés 6 sont conformés en T et les moyens d'amortissement 8 qui leur sont affectés sont successivement et respectivement en prise sur l'une des ailes du T du bras articulé 6 d'un résonateur pendulaire 1, et sur l'une des ailes du bras articulé 6 que comporte un résonateur pendulaire 1 voisin. Selon cette variante, un bras articulé 6 d'un résonateur pendulaire 1 donné est donc un organe de prise 9 d'un moyen d'amortissement 8 provenant d'un résonateur pendulaire 1 adjacent audit résonateur pendulaire 1 donné.

Un même moyen d'amortissement 8 est exploité pour deux résonateurs pendulaires 1 voisins, en coopération avec un autre moyen d'amortissement 8 reliant successivement ces résonateurs pendulaires 1 avec un résonateur pendulaire 1 suivant.

Plus particulièrement encore selon la variante représentée sur la fig.4, les bras articulés 6 sont agencés en bras de levier en étant coudés et articulés sur le support 3 dans leur zone d'inflexion. L'une des extrémités des moyens d'amortissement 8 affectés à un résonateur pendulaire 1 est articulée à l'extrémité libre du coude du bras articulé 6 correspondant, et leur autre extrémité est en prise sur le support 3, et notamment sur une branche 4 voisine de celle portant ledit résonateur pendulaire 1. Selon cette variante, chaque branche 4 portant un résonateur pendulaire 1 donné constitue un organe de prise 9 d'un moyen d'amortissement 8 provenant d'un résonateur pendulaire 1 adjacent audit résonateur pendulaire 1 donné.

Sur la fig. 5, un rotor 100 est partiellement représenté, pour illustrer une forme de réalisation d'un mécanisme 90 de l'invention. Le support 3 est porteur d'un résonateur pendulaire 1, dont le bras 6 est articulé autour d'un axe de pivotement A2 parallèle à l'axe A1 de rotation du support 3. Les moyens d'amortissement 8 sont du type électromagnétique et associent deux organes magnétiques coopérants 10,11, dont l'un est agencé en cage 10 à l'intérieur de laquelle est disposé un corps 11 formant l'autre organe magnétique. Le corps 11 est formé d'une masse magnétique et la cage 10 intègre un élément électromagnétique 12, tel qu'une bobine en circuit ouvert ou montée en court circuit avec une résistance, procurant un amortissement spontané du mouvement de pivot du bras articulé 6. Les moyens d'amortissement 8 sont portés par la branche 4 du support 3 qui est porteuse du résonateur pendulaire 1, en étant disposés en décalage axial par rapport au plan général P de mobilité du résonateur 1. Le corps 11 est relié à la masse 5 du résonateur pendulaire 1 par l'intermédiaire d'une bielle de manoeuvre 13. Un mouvement de pivot du bras articulé 6 est freiné par le corps 11 qui coopère avec l'élément électromagnétique 12 logé dans la cage 10, et les vibrations auxquelles est soumis le résonateur pendulaire 1 sont amorties en prenant en compte les caractéristiques de la structure porteuse et/ou d'imperfections constatées de l'absorption des vibrations obtenues, à partir desquelles sont réglés les moyens d'amortissement 8.

Chaque moyen d'amortissement 8, et plus particulièrement la cage 10, est fixé par un organe dédié 10' à un organe de prise 9 fixe, en l'occurrence une branche 4 du support 3.

Une distinction entre les résultats spécifiquement procurés par le résonateur 1 seulement et son association avec les moyens d'amortissement 8, réside dans une aptitude à amortir des vibrations de fréquences significativement différentes, respectivement relatives au rotor 100 et à la structure porteuse 106. Les résonateurs pendulaire 1 agissent selon la force centrifuge induite par le mouvement tournant du rotor 100, leur réglage étant obtenu spontanément en fonction du régime de rotation du rotor 100. Les résonateurs pendulaires 1 amortissent les vibrations induites par une excitation forcée suivant une fréquence correspondante à une ou plusieurs harmoniques de le rotor 100, sur une bande étroite de fréquences. Le mécanisme 90, de la présente invention associant les résonateurs pendulaires 1 et les moyens d'amortissement 8 qui leurs sont affectés vibre en quadrature de phase par rapport à la structure porteuse 106 et s'oppose à son mouvement, une partie de l'amortissement procuré étant transféré sur la structure porteuse 106. Par ailleurs, l'amortissement que procurent les moyens d'amortissement 8 à l'encontre du mouvement des résonateurs pendulaires 1 procure surtout un accroissement de la bande de fréquences des vibrations par rapport à celle que procure les résonateurs pendulaires 1 en eux-mêmes seulement et par conséquent répondent au besoin des vibrations à l'origine d'instabilités aéroélastiques.

Sur la fig.6, un rotor 100 est équipé d'un mécanisme selon une autre forme de réalisation de la présente invention. Les moyens d'amortissement 8 sont du type électromagnétique et sont portés par le bras articulé 6 que comporte le résonateur pendulaire 1. Les moyens d'amortissement 8 associent une cage 10 qui intègre un élément magnétique 12 et qui loge un corps magnétique 11 coaxial. Le corps 11 est formé au moins en partie par la masse 5 que comporte le résonateur pendulaire 1, et est relié à un organe de prise 9 solidaire du support 3 par l'intermédiaire d'une bielle 7 articulée à sa périphérie.

Sur les fig.7 et fig. 8, un rotor 100 est équipé d'un mécanisme selon une autre forme de réalisation de la présente invention. Les moyens d'amortissement 8 sont du type électromagnétique et associent un corps 11 formé au moins en partie par la masse 5 que comporte le résonateur pendulaire 1, qui est logée à l'intérieur d'une cage 10 portée par un organe de prise 9 du moyeu 3 sur lequel est articulé le résonateur 1 par l'intermédiaire du bras articulé 6. La cage intègre des éléments électromagnétiques 14, tels que des pistes ou un bobinage, qui sont disposés en décalage axial par rapport au plan global P de mobilité du résonateur 1 en étant placés de part et d'autre du corps 11. Ces éléments électromagnétiques 14 sont notamment conformés en secteur angulaire, de sorte que la masse 5 du résonateur pendulaire 1 soit maintenue à proximité des éléments électromagnétiques 14 lors de son pivotement induit par la rotation de la tête de rotor 2.

## Revendications

1. Mécanisme (90) amortisseur de vibrations pour empêcher le couplage des modes de vibration d'une structure porteuse (106) et des modes de vibration d'un rotor (100) fixé à ladite structure porteuse (106), ledit mécanisme comportant un support (3) apte à être fixé audit rotor (100) et au moins un résonateur (1) comportant une masse (5) portée par ledit support (3) par l'intermédiaire de moyens de montage en mobilité (6) de cette masse (5) sur ledit support (3)
**caractérisé en ce que**, ledit mécanisme (90) comportant des moyens d'amortissement (8) du résonateur (1) qui sont interposés entre le résonateur (1) et un organe de prise (9) sur ledit support (3) ; lesdits moyens de montage en mobilité comportant un bras articulé par masse, chaque bras articulé (6) est agencé en bras de levier en étant articulé sur le support (3), en étant articulé sur les moyens d'amortissement (8) à l'une de ses extrémités et en étant porteur de la masse (5) à une autre extrémité.

2. Mécanisme selon la revendication 1,
**caractérisé en ce que**, lesdits moyens de montage en mobilité comportant un bras articulé par masse, le résonateur (1) est du type pendulaire comprenant une masse (5) portée en pendule sur ledit support (3) par l'intermédiaire d'un bras articulé (6) .

3. Mécanisme selon l'une quelconque des revendications précédentes,
**caractérisé en ce que** le résonateur (1) constitue des moyens aptes à s'opposer aux vibrations sur une première plage de fréquences étroites induites par une excitation forcée à laquelle est soumise le rotor (100), et **en ce que** les moyens d'amortissement (8) associés au résonateur (1) sont aptes à s'opposer aux vibrations à l'origine d'une instabilité sur une deuxième plage de fréquences plus large que ladite première plage en étant adaptés en fonction des caractéristiques d'une structure porteuse de l'appareil volant et/ou en fonction d'imperfections constatées de l'amortissement des vibrations.

4. Mécanisme selon l'une quelconque des revendications précédentes,
**caractérisé en ce que** l'organe de prise (9) est indifféremment un organe fixe ou un organe mobile dudit mécanisme (90).

5. Mécanisme selon l'une quelconque des revendications précédentes,
**caractérisé en ce que** la masse (5) est portée en pendule selon une mobilité de pivotement autour d'au moins un axe de pivotement (A2) orienté indifféremment parallèlement et/ou perpendiculairement à un axe de rotation (A1) du support (3).

6. Mécanisme selon l'une quelconque des revendications précédentes,
**caractérisé en ce que** les moyens d'amortissement (8) sont du type à déformation mécanique ou élastique.

7. Mécanisme selon la revendication 6,
**caractérisé en ce que** le résonateur (1) est monté mobile sur une première branche (4) du support (3), et **en ce que** les moyens d'amortissement (8) sont interposés entre les moyens de montage en mobilité (6) que comporte le résonateur (1) et une deuxième branche (4) du moyeu (3) qui est voisine de la première branche (4) et qui constitue le dit organe de prise (9).

8. Mécanisme selon la revendication 6,
**caractérisé en ce qu'**une pluralité de résonateurs (1) étant montés mobiles sur le support (3), les moyens d'amortissement (8) sont interposés entre les moyens de montage en mobilité (6) que comportent deux résonateurs (1) voisins et sur lesquels les moyens d'amortissement (8) sont conjointement en prise.

9. Mécanisme selon l'une quelconque des revendications 1 à 5,
**caractérisé en ce que** les moyens d'amortissement (8) sont du type électromagnétique associant des organes magnétiques coopérants respectivement affectés au résonateur (1) et au support (3), l'un des organes magnétiques étant agencé en cage (10) intégrant au moins un élément magnétique (12,14), cette cage (10) logeant un corps (11) formant au moins en partie l'autre organe magnétique.

10. Mécanisme selon la revendication 9,
**caractérisé en ce que**, lesdits moyens de montage en mobilité comportant un bras articulé par masse, le bras articulé (6) est monté mobile en pivotement sur le support (3) autour d'un axe de pivotement (A2) parallèle à l'axe de rotation (A1) du support (3).

11. Mécanisme selon la revendication 10,
**caractérisé en ce que** la cage (10) est portée par une branche (4) du support (3) sur laquelle est monté le résonateur (1), la cage (10) étant disposée en décalage axial par rapport au plan global (P) de mobilité du résonateur pendulaire (1) et le corps (11) étant relié au résonateur (1) par l'intermédiaire d'une bielle de manoeuvre (13).

12. Mécanisme selon la revendication 10,
**caractérisé en ce que** la cage (10) est portée par une branche (4) du support (3) sur laquelle est monté le résonateur (1), au moins un élément magnétique (14) intégré à la cage (10) étant disposé en décalage axial par rapport au plan global (P) de mobilité du résonateur (1) et le corps (11) constituant au moins en partie la masse (5) du résonateur (1).

13. Mécanisme selon la revendication 10,
**caractérisé en ce que** la cage (10) est portée par le bras d'articulation (6) que comporte le résonateur (1), le corps (11) constituant au moins en partie la masse (5) du résonateur pendulaire (1) et étant tangentiellement articulé à l'extrémité d'une bielle de retenue (7) articulée à son autre extrémité sur l'organe de prise (9) que comporte le support (3).

14. Mécanisme selon l'une quelconque des revendications précédentes,
**caractérisé en ce que** ledit mécanisme est passif.

15. Mécanisme selon l'une quelconque des revendications précédentes,
**caractérisé en ce que** les moyens d'amortissement (8) sont de type soit hydraulique, soit pneumatique, soit élastique ou soit magnétique.

16. Appareil volant (110) muni d'un rotor (100) et d'une structure porteuse (106) comportant une cellule (105) et une structure de montage (104) du rotor (100) à ladite cellule (105),
**caractérisé en ce que** ledit rotor (100) comporte un mécanisme (90) amortisseur de vibrations selon l'une quelconque des revendications précédentes pour empêcher le couplage des modes de vibration de ladite structure porteuse (106) et des modes de vibration dudit rotor (100).

## Claims

1. Vibration damping mechanism (90) for preventing the coupling of the vibration modes of a carrying structure (106) and the vibration modes of a rotor (100) fastened to said carrying structure (106), said mechanism comprising a support (3) suitable for being fastened to said rotor (100) and at least one resonator (1) comprising a mass (5) carried by said support (3) via movable mounting means (6) for movably mounting said mass (5) on said support (3),
**characterised in that** said mechanism (90) comprises damping means (8) for damping the resonator (1) which are interposed between the resonator (1) and an engaging member (9) on said support (3), and said movable mounting means comprise one hinged arm per mass, each hinged arm (6) being arranged as a lever arm, being hinged to the support (3) and hinged to the damping means (8) at one of its ends and carrying the mass (5) at another end.

2. Mechanism according to Claim 1,
**characterised in that** said movable mounting means comprise one hinged arm per mass, the resonator (1) being of the pendular type comprising a mass (5) carried in pendular manner on said support (3) via a hinged arm (6).

3. Mechanism according to either one of the preceding claims,
**characterised in that** the resonator (1) constitutes means suitable for opposing vibrations over a first narrow frequency range induced by forced excitation to which the
rotor (100) is subjected, and **in that** the damping means (8) associated with the resonator (1) are suitable for opposing vibrations originating from instability over a second frequency range that is wider than said first range by being adapted as a function of the characteristics of a carrying structure of a flying machine and/or as a function of imperfections observed in the damping of the vibrations.

4. Mechanism according to any one of the preceding claims,
**characterised in that** the engaging member (9) may equally well be a fixed member or a movable member of said mechanism (90).

5. Mechanism according to any one of the preceding claims,
**characterised in that** the mass (5) is carried in pendular manner according to a pivotal movement about at least one pivot axis (A2) that may equally well be oriented parallel and/or perpendicular to an axis of rotation (A1) of the support (3).

6. Mechanism according to any one of the preceding claims,
**characterised in that** the damping means (8) are of the mechanical or elastic deformation type.

7. Mechanism according to Claim 6,
**characterised in that** the resonator (1) is movably mounted on a first branch (4) of the support (3), and **in that** the damping means (8) are interposed between the movable mounting means (6) that the resonator (1) comprises and a second branch (4) of the hub (3) that is adjacent to the first branch (4) and that constitutes said engaging member (9).

8. Mechanism according to Claim 6,
**characterised in that** a plurality of resonators (1) are movably mounted on the support (3), the damping means (8) being interposed between the movable mounting means (6) that two adjacent resonators (1) comprise and on which the damping means (8) are jointly engaged.

9. Mechanism according to any one of Claims 1 to 5,
**characterised in that** the damping means (8) are of the electromagnetic type, associating cooperating magnetic members assigned respectively to the resonator (1) and to the support (3), one of the magnetic members being arranged as a cage (10) incorporating at least one magnetic element (12, 14), said cage (10) housing a body (11) forming at least partly the other magnetic member.

10. Mechanism according to Claim 9,
**characterised in that** said movable mounting means comprise one hinged arm per mass, the hinged arm (6) being mounted to be pivotably movable on the support (3) about a pivot axis (A2) parallel to the axis of rotation (A1) of the support (3).

11. Mechanism according to Claim 10,
**characterised in that** the cage (10) is carried by a branch (4) of the support (3) on which the resonator (1) is mounted, the cage (10) being located so as to be axially offset relative to the general plane (P) in which the pendular resonator (1) moves, and the body (11) being connected to the resonator (1) via a driving connecting rod (13).

12. Mechanism according to Claim 10,
**characterised in that** the cage (10) is carried by a branch (4) of the support (3) on which the resonator (1) is mounted, at least one magnetic element (14) incorporated in the cage (10) being located so as to be axially offset relative to the general plane (P) in which the resonator (1) moves, and the body (11) constituting at least partly the mass (5) of the resonator (1).

13. Mechanism according to Claim 10,
**characterised in that** the cage (10) is carried by the hinged arm (6) that the resonator (1) comprises, the body (11) constituting at least partly the mass (5) of the pendular resonator (1) and being tangentially hinged to the end of a retaining connecting rod (7) hinged at its other end to the engaging member (9) that the support (3) comprises.

14. Mechanism according to any one of the preceding claims,
**characterised in that** said mechanism is passive.

15. Mechanism according to any one of the preceding claims,
**characterised in that** the damping means (8) are of hydraulic, pneumatic, elastic, or magnetic type.

16. Flying machine (110) provided with a rotor (100) and a carrying structure (106) comprising an airframe (105) and a mounting structure (104) for mounting the rotor (100) to said airframe (105),
**characterised in that** said rotor (100) comprises a vibration damping mechanism (90) according to any one of the preceding claims for preventing the coupling of the vibration modes of said carrying structure (106) and the vibration modes of said rotor (100).

## Patentansprüche

1. Schwingungsdämpfungsmechanismus (90) zum Verhindern des Koppelns von Schwingungsmoden einer Tragstruktur (106) und Schwingungsmoden eines Rotors (100), der an der Tragstruktur 106 befestigt ist, wobei der Mechanismus einen an dem Rotor (100) befestigbaren Träger (3) und mindestens einen Resonator (1) mit einer Masse (5), die von dem Träger (3) über Mittel (6) zur beweglichen Montage dieser Masse (5) auf dem Träger (3) getragen wird,
**dadurch gekennzeichnet, dass** der Mechanismus (90) Dämpfungsmittel (8) des Resonators (1) aufweist, die zwischen dem Resonator (1) und einem Halteorgan (9) auf dem Träger (3) angeordnet sind, wobei die Mittel zur beweglichen Montage pro Masse einen Gelenkarm aufweisen, wobei jeder Gelenkarm (6) als Hebelarm ausgebildet ist, indem er an dem Träger (3) und an den Dämpfungsmitteln (8) mit einem seiner Enden angelenkt ist und indem er die Masse (5) an seinem anderen Ende trägt.

2. Mechanismus nach Anspruch 1,
**dadurch gekennzeichnet, dass** die Mittel zur beweglichen Montage einen Gelenkarm pro Masse aufweisen, der Resonator (1) als Pendel ausgebildet ist mit einer pendelartig an dem Träger (3) über einen Gelenkarm (6) aufgehangenen Masse (5).

3. Mechanismus nach einem der vorstehenden Ansprüche,
**dadurch gekennzeichnet, dass** der Resonator (1) Mittel darstellt, die sich Schwingungen in einem ersten engen Frenquenzband, hervorgerufen durch eine erzwungene Anregung, der der Rotor (100) unterworfen ist, entgegensetzen können, und **dadurch**, dass die zu dem Resonator (1) gehörenden Dämpfungsmittel (8) sich Schwingungen entgegensetzen können, die ihren Ursprung in einer Instabilität in einem zweiten Frequenzband haben, welches breiter ist als das erste Frequenzband, indem sie in Abhängigkeit von Eigenschaften einer Tragstruktur des Fluggerätes und/oder in Abhängigkeit von festgestellten Unzulänglichkeiten der Schwingungsdämpfung angepasst sind.

4. Mechanismus nach einem der vorstehenden Ansprüche,
**dadurch gekennzeichnet, dass** es gleichgültig ist, ob das Halteorgan (9) ein feststehendes Organ ist oder ein bewegliches Organ des Mechanismus (90).

5. Mechanismus nach einem der vorstehenden Ansprüche,
**dadurch gekennzeichnet, dass** die Masse (5) pendelartig aufgehangen ist mit einer Schwenkbeweglichkeit um mindestens eine Schwenkachse (A2), bei der es gleichgültig ist, ob sie parallel und/oder senkrecht zu einer Drehachse (A1) des Trägers (3) orientiert ist.

6. Mechanismus nach einem der vorstehenden Ansprüche,
**dadurch gekennzeichnet, dass** die Dämpfungsmittel (8) mechanisch oder elastisch verformbar sind.

7. Mechanismus nach Anspruch 6,
**dadurch gekennzeichnet, dass** der Resonator (1) beweglich an einem ersten Arm (4) des Trägers (3) montiert ist und **dadurch**, dass die Dämpfungsmittel (8) zwischen den beweglichen Montagemitteln (6), die der Resonator (1) aufweist, und einem zweiten Arm (4) der Nabe (3) angeordnet sind, der benachbart zum ersten Arm (4) angeordnet ist und der das Halteorgan (9) bildet.

8. Mechanismus nach Anspruch 6,
**dadurch gekennzeichnet, dass** eine Mehrzahl von Resonatoren (1) mobil auf dem Träger (3) angeordnet ist, die Dämpfungsmittel (8) zwischen den mobilen Montagemitteln (6), die zwei benachbarte Resonatoren (1) aufweisen, und mit denen die Dämpfungsmittel (8) zusammen in Eingriff stehen.

9. Mechanismus nach einem der Ansprüche 1 bis 5,
**dadurch gekennzeichnet, dass** die Dämpfungsmittel (8) elektromagnetische Dämpfungsmittel sind, die magnetische zusammenwirkende Elemente miteinander verbinden, die dem Resonator (1) bzw. dem Träger (3) zugeordnet sind, wobei eines der magnetischen Elemente in einem Korb (10) angeordnet ist, der mindestens ein magnetisches Element (12, 14) enthält, wobei dieser Korb (10) einen Körper (11) aufnimmt, der mindestens teilweise das andere magnetische Element bildet.

10. Mechanismus nach Anspruch 9,
**dadurch gekennzeichnet, dass** die mobilen Montagemittel einen Gelenkarm pro Masse aufweisen, wobei der Gelenkarm (6) schwenkbeweglich am Träger (3) um eine Schwenkachse (A2) aufgehängt ist, die parallel zur Drehachse (A1) des Trägers (3) ist.

11. Mechanismus nach Anspruch 10,
**dadurch gekennzeichnet, dass** der Korb (10) von einem Arm (4) des Trägers (3) getragen wird, auf dem der Resonator (1) montiert ist, wobei der Korb (10) axial versetzt bezüglich der allgemeinen Beweglichkeitsebene (P) des pendelartigen Resonators (1) angeordnet ist und der Körper (11) mit dem Resonator (1) über eine Steuerstange (13) verbunden ist.

12. Mechanismus nach Anspruch 10,
**dadurch gekennzeichnet, dass** der Korb (10) von einem Arm (4) des Trägers (3) getragen wird, auf dem der Resonator (1) montiert ist, wobei mindestens ein magnetisches Element (14), welches in dem Korb (10) integriert ist, axial versetzt bezüglich der allgemeinen Beweglichkeitsebene (P) des Resonators (1) angeordnet ist und wobei der Körper (11) mindestens teilweise die Masse (5) des Resonators (1) bildet.

13. Mechanismus nach Anspruch 10,
**dadurch gekennzeichnet, dass** der Korb (10) von dem Gelenkarm (6), den der Resonator (1) aufweist, getragen wird, wobei der Körper (11) mindestens teilweise die Masse (5) des pendelartigen Resonators (1) bildet und tangential an einem Ende einer Haltestange (7) angelenkt ist, die mit ihrem anderen Ende am Halteorgan (9) des Trägers (3) angelenkt ist.

14. Mechanismus nach einem der vorstehenden Ansprüche,
**dadurch gekennzeichnet, dass** der Mechanismus passiv ist.

15. Mechanismus nach einem der vorstehenden Ansprüche,
**dadurch gekennzeichnet, dass** die Dämpfungsmittel (8) hydraulische, pneumatische, elastische oder magnetische Dämpfungsmittel sind.

16. Fluggerät (110) mit einem Rotor (100) und einer Tragstruktur (106), die eine Kabine (105) und einen Aufbau (104) zur Montage des Rotors (100) an der Kabine (105) aufweist,
**dadurch gekennzeichnet, dass** der Rotor (100) einen Schwingungsdämpfungsmechanismus (90) nach einem der vorstehenden Ansprüche aufweist, um ein Koppeln von Schwingungsmoden der Tragestruktur (106) und Schwingungsmoden des Rotors (100) zu verhindern.
